# EUROPEAN PATENT APPLICATION

(11) **EP 1 321 270 A1**
(43) Date of publication of application: **25.06.2003**
(21) Application number: 01205220.5
(22) Date of filing: 18.12.2001
(51) Int. Cl.: B29C 41/18, B29C 41/00

(54) **Process for making a slush-moulded article**

(71) Applicant: DSM N.V., 6411 TE Heerlen (NL)
(72) Inventor: Lange, Ronald Frans Maria, 6371 LX Landgraaf (NL); Rutgers, Gerhard Johan, 6132 HS Sittard (NL)
(74) Representative: Krijgsman, Willem

(57) **Abstract**

The invention relates to a process for making a moulded article comprising slush moulding of a thermoplastic copolyester elastomer composition, characterized in that a thermoplastic copolyester elastomer composition is used that contains as major component at least one copolyether ester consisting essentially of polyester hard segments that are built up from repeating units derived from at least one alkylene diol and at least one aromatic dicarboxylic acid or an ester thereof and polyether soft segments derived from a poly(propylene oxide)diol. With the process according to the invention the moulded article can be easily removed from the mould without causing deformation of the article. Other advantages of the invention include the possibility to make an article with a skin of high homogeneity, very good performance at low temperature and high resistance to long-term heat ageing, and good adhesion to other materials.

The invention also relates to a moulded article comprising a slush-moulded layer obtainable by the process according to the invention, like an automotive instrument panel.

## Description

The invention relates to a process for making a moulded article comprising slush moulding of a thermoplastic copolyester elastomer composition. The invention also relates to a slush-moulded article obtainable by said process.

Such a process is known from a publication in Automotive Engineering, May 1997, pages 43-45.

Slush moulding, also referred to as powder slush moulding or slush casting, is a processing technique similar to rotation moulding, wherein a mould of the article to be created is preheated to a temperature designed to melt the thermoplastic composition to be used. The mould is then filled with the thermoplastic composition, which is in the form of a powder or micro pellets with particle size of generally below 1200 µm, and when a skin has formed in the mould, excess material is removed. The mould may undergo a post-heating step to complete the formation of a homogeneous skin. The mould is then cooled or quenched with water and/or air during which the thermoplastic material solidifies, and the moulded article is removed from the mould. The mould may be embossed with a specific texture to produce articles with a textured surface, which find particularly use in simulated leather applications and in instrument panels and other interior automotive applications. The slush-moulded article may be used as a freestanding film or sheet, or form part of a laminated structure, e.g. as a skin layer.

Various thermoplastic materials are being used in slush moulding. Established materials are polyvinyl chloride (PVC) compositions, including PVC/ABS blends, because of their low cost and favourable processing characteristics. The use of PVC compositions, however, is facing increasing resistance because of environmental reasons, relating to the high chlorine content, and because of performance problems, like fogging phenomena of plasticizers contained in these compositions and brittleness at low temperatures. Several alternative materials have been identified, like thermoplastic polyurethane (TPU) compositions (for example in EP 1033379 A2), thermoplastic vulcanisates based on polyolefins (TPV; e.g. WO 9821273 A2), compositions based on copolymers of olefins and polar and/or functional monomers (e.g. WO 0063286 A1), or elastomer compositions based on block copolymers of conjugated dienes and styrenes (e.g. WO 9932558 A1). None of these materials appears to provide the desired combination of properties, but show either disadvantageously high cost, insufficient cold impact resistance, low wear and scratch resistance, insufficient chemical resistance, poor long term heat-ageing, or a combination of these. In the cited article in Automotive Engineering, May 1997, thermoplastic copolyester elastomer compositions are indicated to have high potential as alternative material for slush moulding of for example instrument panels.

A drawback of the known process is that processing of the thermoplastic copolyester elastomer composition is troublesome, especially removal of the article from the mould.

The object of the invention is therefore to provide a process for making a moulded article comprising slush moulding of a thermoplastic copolyester elastomer composition that does not show said demoulding problems.

This object is achieved according to the invention with a process wherein a thermoplastic copolyester elastomer composition is used that contains as major component at least one copolyether ester consisting essentially of polyester hard segments that are built up from repeating units derived from at least one alkylene diol and at least one aromatic dicarboxylic acid or an ester thereof and polyether soft segments derived from a poly(propylene oxide)diol.

With the process according to the invention the moulded article can be easily removed from the mould without causing deformation of the article.

Another advantage of the process according to the invention is that during slush moulding individual particles of the thermoplastic copolyester elastomer composition are melted, or sintered, into a skin of high homogeneity. Still another advantage of the process according to the invention is that an article moulded from the thermoplastic copolyester elastomer composition shows very good performance at low temperatures, even below -35°C, which enables production of moulded articles like instrument panels with both flip-top or invisible and integral air bag doors. Such air bag doors pass deployment tests at -35°C with controlled opening and without liberating small particles or splintering. Still another advantage of the process according to the invention is that moulded articles can be made that retain physical properties when subjected to long term, high temperature (e.g. 120°C) ageing tests. An automotive instrument panel can be subject to such temperatures, when a car is exposed to the sun. Another advantage of the process according to the invention is that an article moulded from the thermoplastic copolyester elastomer composition shows good adhesion to various other materials; including coating or paint layers applied to it and polyurethane foams on which it functions as a skin layer.

A thermoplastic copolyester elastomer composition is understood to mean a composition that contains as major component at least one copolyester elastomer. Major component is understood to mean that the at least one copolyester elastomer forms a continuous phase or matrix of the composition.

A thermoplastic copolyester elastomer is also referred to as segmented copolyester or block copolyester. Such a segmented copolyester is understood to be a segmented copolymer containing hard polyester segments and soft segments of a flexible polymer; that is a substantially amorphous polymer with a glass-transition temperature (T_{g}) of below 0°C. Examples of soft segments are segments derived from aliphatic polyesters or polycarbonates, or aliphatic polyethers. This last segmented copolyester is also referred to as copolyether ester.

The copolyether ester in the copolyester elastomer composition that is used in the process according to the invention has polyether soft segments derived from a poly(propylene oxide)diol. Diol in poly(propylene oxide)diol is understood to mean that the poly(propylene oxide) has essentially hydroxyl groups as end groups; that is has a hydroxyl functionality of about 1.7-2.3. A lower functionality would hamper synthesis of a copolyether ester of sufficiently high molar mass; a higher functionality would undesirably increase chain branching or even induce crosslinking of the copolyether ester. The hydroxyl functionality is therefore preferably 1.8-2.2, more preferably 1.9-2.1, and even more preferably about 2. Within the context of the present application a poly(propylene oxide) is understood to indicate a copolymer of propylene oxide and optionally another alkylene oxide with 1-6 carbon atoms, with propylene oxide constituting at least 50 mole%, preferably at least 60 mole% of the copolymer. Suitable alkylene oxides are for example ethylene oxide, tetrahydrofuran or tetramethylene oxide, or neopentylene oxide. Preferably, tetramethylene oxide and/or neopentylene oxide are used as comonomers in a random copolymer with propylene oxide. The advantage of such copolymers is a low T_{g}, resulting in good low temperature performance of a copolyether ester comprising these copolymers as soft segment.

In a preferred embodiment of the process according to the invention the copolyester elastomer composition contains a copolyether ester with polyether soft segments derived from an ethylene oxide-terminated poly(propylene oxide)diol. With an ethylene oxide-terminated poly(propylene oxide)diol is indicated a triblock copolymer with a poly(propylene oxide) as defined above as the central block, and two end blocks of poly(ethylene oxide). Advantages of such a polyether as soft block include its hydroxyl functionality and good reactivity and compatibility in the synthesis of polyether esters. The mass ratio of poly(propylene oxide) and poly(ethylene oxide) blocks may vary within a wide range, for example between 20:1 and 1:6, but is preferably between 10:1 and 1:1. Advantages of such a polyether segment include better properties of a polyether ester at elevated temperatures and easier release of a slush-moulded product. Without wishing to be bound to any theory, the inventors assume this may be related to better retention of crystallinity of the polyester hard segment in the copolyether ester.

Preferably, the T_{g} of the polyether segment is below -20 °C, more preferably below -40, and most preferably below -50 °C. The molar mass of the soft segments may vary within a wide range, but preferably the molar mass is chosen between 400 and 6000, more preferably between 500 and 4000, and most preferably between 750 and 3000 g/mol. Advantage thereof is improved performance at low temperatures with retention of properties at elevated temperature.

The at least one copolyether ester in the copolyester elastomer composition that is used in the process according to the invention contains hard segments that are built up from repeating units derived from at least one alkylene diol and at least one aromatic dicarboxylic acid or an ester thereof. The alkylene diol contains generally 2-6 C-atoms, preferably 2-4 C-atoms. Examples thereof include ethylene glycol, propylene diol and butylene diol. Preferably, 1,4-butylene diol is used. Examples of suitable aromatic dicarboxylic acids include terephthalic acid, 2,6-naphthalenedicarboxylic acid, 4,4'-biphenyldicarboxylic acid or combinations of these. The advantage thereof is that the resulting polyester is generally semi-crystalline with a melting point of above 150, preferably above 175, and more preferably of above 190°C. The hard segments may optionally further contain a minor amount of units derived from other dicarboxylic acids, for example isophthalic acid, which generally lowers the melting point of the polyester. The amount of other dicarboxylic acids is preferably limited to not more than 10, more preferably not more than 5 mol%, so as to ensure that, among other things, the crystallization behaviour of the copolyether ester is not adversely affected. The hard segment is preferably built up from ethylene terephthalate, propylene terephthalate, and in particular from butylene terephthalate as repeating units. Advantages of these readily available units include favourable crystallisation behaviour and a high melting point, resulting in copolyether esters with good processing properties and excellent thermal and chemical resistance.

In other preferred embodiments of the process according to the invention, the hard segments in the polyether ester are built up from units derived from ethylene glycol, 4,4'-biphenyldicarboxylic acid, terephthalic acid and/or 2,6-naphthalenedicarboxylic acid, and optionally minor amounts of other diacids and/or diols. These copolyether esters show a high crystalline melting point, and fast crystallisation upon cooling from the melt.

The ratio of soft to hard segments in the copolyether ester may vary within wide limits, but is preferably chosen such that a copolyether ester of relatively low hardness is obtained. Preferably, the hardness of the copolyether ester is below 46 Shore D, more preferably below 40 Shore D. A lower hardness of the copolyether ester generally results in improved low temperature performance and better soft feel, or soft touch, of the slush-moulded product obtained by the process according to the invention.

The copolyether ester can further contain a compound with two or more functional groups that can react with an acid- or hydroxyl-group, acting as chain extension or chain branching agent, respectively. Examples of suitable chain extension agents include carbonylbislactams, diisocyanates and bisepoxides. Suitable chain branching agents include e.g. trimellitic acid, trimellitic acid anhydride and trimethylol propane. The amount and type of chain extension or branching agent is chosen such that a block copolyester of desirable melt viscosity is obtained. In general, the amount of a chain branching agent will not be higher than 6.0 equivalents per 100 moles of dicarboxylic acids present in the copolyether ester.

Examples and preparation of copolyether esters are for example described in Handbook of Thermoplastics, ed. O.Olabishi, Chapter 17, Marcel Dekker Inc., New York 1997, ISBN 0-8247-9797-3, in Thermoplastic Elastomers, 2nd Ed, Chapter 8, Carl Hanser Verlag (1996), ISBN 1-56990-205-4, in Encyclopedia of Polymer Science and Engineering, Vol. 12, Wiley & Sons, New York (1988), ISBN 0-471-80944, p.75-117, and the references cited therein.

The copolyester elastomer composition that is used in the process according to the invention may further contain another thermoplastic polymer, preferably a relatively flexible polymer like another thermoplastic elastomer. The composition may for example contain another copolyester elastomer, like a copolyether ester of different hardness, or a copolyester of different chemical composition of the soft and/or hard segments. The copolyester composition may also contain a TPU. Other suitable polymers include block copolymers of styrene and conjugated dienes, e.g. butadiene, like SBS, or more preferably a substantially completely hydrogenated copolymer thereof, like SEBS. Such SEBS polymer may have been functionalised with polar groups, like acid or anhydride groups. Other suitable thermoplastic elastomers are thermoplastic vulcanisates, like those based on blends of polypropylene and crosslinked olefinic rubbers, like EPR- or EPDM-rubber. Also suitable are copolymers of olefins like ethylene with at least one polar comonomer, like (meth)acrylates, optionally with hydroxyl-, carboxyl-, or epoxy-functional groups. Examples thereof are for example given in WO 0063286 A1. If the at least one copolyether ester and other thermoplastic polymer are not compatible, the composition preferably also contains a suitable compatibilizer. The advantage of using a composition containing a copolyether ester and another polymer is that various properties may be tuned to meet specific end-use requirements, like material hardness, or surface gloss.

Preferably, the copolyester elastomer composition further contains a relatively polar polymer that is compatible with the copolyether ester, thus omitting the need for an additional compatibilizer.

The copolyester elastomer composition that is used in the process according to the invention generally contains more than 50 mass%, based on the total composition, of the at least one copolyether ester, preferably more than 60 mass%. This ensures that the copolyether ester forms a continuous phase of the composition, so that processing behaviour and properties like chemical and thermal resistance will be mainly governed by the copolyether ester.

The copolyester elastomer composition preferably has a hardness of below 46 Shore D, more preferably below 40 Shore D. The lower the hardness, the more a soft touch is experienced. Soft touch character of a moulded surface is normally dependent on both the texture of the surface and the hardness of the material.

The copolyester elastomer composition may further comprise any customary additives, like heat- and UV-stabilisers, anti-oxidants, colorants, nucleating agents, processing aids like mould release agents or melt-flow enhancers, mineral fillers, or flame retarding compounds. Preferably, the composition contains an effective heat- and UV-stabilisation package to fulfil typical requirements for automotive interior applications. The presence of nucleating and mould release agents is preferred to further improve slush moulding behaviour.

The copolyester elastomer composition that is used in the process according to the invention is normally in powder or micropellet form with particle size generally below 1200 µm. Particle size, i.e. particle diameter, is normally measured by sieving with standard mesh sizes. Particle size is primarily determined by the desired end use. For instance, if a thin smooth layer is desired, the particle size should be relatively small compared to the particle size used to make a thick layer or sheet. In the first case, powders having a particle size of less than 500 µm, preferably less than 400 µm, more preferably from 100-350 µm are used; whereas otherwise particle size of 500-1000 µm may give acceptable results.

The copolyester elastomer composition is generally produced via known techniques, like melt-blending the different components using a single screw, or more preferably a twin screw extruder. The composition is then normally obtained as pellets of particle size in the mm range. Smaller pellets can be made by using melt orifices of smaller diameter, combined with a die face pelletizer or a strand cutter operating at high speed. Alternatively, pellets may be mechanically reduced in size, for example by grinding at low temperature. Preferably, grinding, milling, or pulverizing of the composition is performed below the glass transition temperature or temperatures of the copolymers in the composition; that below -70 or even below -90°C, in order to obtain a powder of more regular form.

Flow behaviour of the powdered copolyester elastomer composition can be improved by coating it with a fine powder, for example by dry blending with a mineral of particle size below 10 µm, such as alumina or silica or another inorganic oxide. The amount of such fine powder is generally between 0.1 and 10 mass% (based on total composition).

The invention also relates to a slush-moulded article obtainable by the process according to the invention, as well as to a moulded article comprising a slush-moulded layer obtainable by the process according to the invention. Such moulded articles show an advantageous combination of properties; including a nice surface appearance and good soft feel, excellent low temperature performance, long term heat-ageing resistance, versatile mass colourability, direct adhesion to urethane foams. The invention therefore especially relates automotive interior applications, like instrument panels with a slush-moulded skin layer. In a special embodiment of the invention, the instrument panel is provided with invisible and integral air bag doors. The aesthetic aspects and wear properties of the skin layer from the copolyester elastomer composition are such that no additional coating layers need to be applied. In case it is preferred to apply a coating, no surface pre-treatment is needed to ensure good adhesion.

The invention will now be further elucidated with reference to the following examples.

### Example 1.

A copolyester elastomer composition containing as major component a copolyether ester consisting essentially of polyester hard segments built up from butylene terephthalate units and soft segments derived from an ethylene oxide-terminated poly(propylene oxide)diol of molar mass (Mₙ) of about 2300 g/mol and ratio propylene oxide/ethylene oxide of about 2/1, with a hardness of about 38 Shore D, and further containing an effective heat- and UV-stabilisation system and carbon black, and with a relative solution viscosity (RSV, as measured on a 1 mass% solution of copolymer in m-cresol at 25°C) of 2.8, was cryogenically grinded using liquid nitrogen and then sieved into a powder with particle size of about 100-350 µm.

The powdered copolyester elastomer composition was fed into a preheated mould in the shape of a dashboard and distributed along the surface in about 30 sec., after which the mould was further heated at about 245°C in an oven; followed by immersing the mould in water to cool mould and article. A slush-moulded sheet of about 1 mm thickness could be removed from the mould without problems, and without visible deformation of the sheet. This sheet can be suitably used as a dashboard skin in an automotive instrument panel.

### Comparative experiment A.

A heat- and UV-stabilized black copolyester elastomer composition containing as major component a copolyether ester consisting essentially of polyester hard segments built up from butylene terephthalate units and soft segments derived from a poly(tetramethylene oxide)diol of Mₙ of about 2000 g/mol, with Shore D hardness of about 40 and RSV of 3.45, was cryogenically grinded and subsequently sieved into a powder with particle size of about 100-350 µm.

This powdered copolyester elastomer composition, which is of different chemical composition than a copolyether ester as used in the process according to the invention, was analogously to Example 1 fed into the preheated mould and distributed along the surface in about 30 sec., after which the mould was further heated at about 245°C in an oven; followed by immersing the mould in water to cool mould and article. The moulded sheet of about 1 mm thickness could only be removed from the mould with excessive force, thereby irreversibly deforming or even damaging the sheet; making it unsuitable for further use.

## Claims

1. Process for making a moulded article comprising slush moulding of a thermoplastic copolyester elastomer composition, **characterized in that** a thermoplastic copolyester elastomer composition is used that contains as major component at least one copolyether ester consisting essentially of polyester hard segments that are built up from repeating units derived from at least one alkylene diol and at least one aromatic dicarboxylic acid or an ester thereof and polyether soft segments derived from a poly(propylene oxide)diol.

2. Process according to claim 1, wherein the polyether soft segments have been derived from an ethylene oxide-terminated poly(propylene oxide)diol.

3. Process according to claim 2, wherein the ethylene oxide-terminated poly(propylene oxide)diol contains poly(propylene oxide) and poly(ethylene oxide) in a mass ratio of between 10 and 1.

4. Process according to any one of claims 1-3, wherein the polyester hard segments are built up from butylene terephthalate units.

5. Process according to any one of claims 1-4, wherein the copolyester elastomer composition has a hardness of below 46 Shore D.

6. Moulded article comprising a slush-moulded layer obtainable by the process according to any one of claims 1-5.

7. Moulded article according to claim 6, being an automotive instrument panel.
